Europäisches Patentamt

European Patent Office

Office européen des brevets

(11) Publication number: **0 208 415**
**A1**

## (12) EUROPEAN PATENT APPLICATION

(21) Application number: 86304327.9

(22) Date of filing: 06.06.86

(51) Int.Cl.⁴: **C 03 B 37/16**

(30) Priority: 10.07.85 GB 8517399

(43) Date of publication of application:
14.01.87 Bulletin 87/3

(84) Designated Contracting States:
DE FR NL SE

(71) Applicant: The General Electric Company, p.l.c.
1 Stanhope Gate
London W1A 1EH(GB)

(72) Inventor: Arnold, Leslie John
97 Dalston Gardens
Stanmore Middlesex HA7 1DA(GB)

(74) Representative: Kirby, Harold Victor Albert et al,
Central Patent Department Wembley Office The General
Electric Company, p.l.c. Hirst Research Centre East Lane
Wembley Middlesex HA9 7PP(GB)

(54) Method of and apparatus for cleaving optical fibres.

(57) A method of cleaving a plurality of optical fibres (1) in which the fibres are tensioned over a surface (3) formed with a transverse gap (8) and a lightly loaded cutter (9) is brought slowly into contact with the fibres (1) over the gap (8), and the pressure gradually increased. Such a process effects the cleaving of the fibres (1) substantially simultaneously, and avoids any significant redistribution of the tension between the fibres (1) before cleavage.

Fig.1.

-1-

HR/2741

## Method of and Apparatus for
## Cleaving Optical Fibres

This invention relates to the cleaving of optical fibres.

One method of cleaving individual optical fibres which has been found to be highly effective is described in co-pending Patent Application No. 8400225 (2134101), such a method comprising the steps of axially tensioning the fibre over a supporting surface, applying a lightly loaded cutter, moving radially with respect to the fibre axis under a low momentum, to the surface of the fibre, and subsequently increasing the load on the cutter to apply a correspondingly increasing radial pressure to the tensioned fibre until the fibre cleaves. The contact of the cutter with the fibre produces a shallow "nick", i.e. an indent, in the fibre surface, and the axial tension applied to the fibre causes a fracture to propogate through the entire cross-section of the fibre from the base of the nick around which the stress concentration is greatest, and the method has been found to achieve cleanly cut fibre surfaces lying within one or two degrees to the radial plane, without any appreciable hackle, that is to say gross surface roughness due to multiple fracture bifurcation.

Hitherto it has been found difficult to cleave a plurality of parallel fibres satisfactorily in a single operation by this method. This is believed to be because the cutter does not always make contact with all the fibres simultaneously, due, for example, to variations in the external diameters of the fibres up to the allowed tolerances, or to the trapping of debris, produced by the removal of the plastic coatings from the fibres prior to cleaving, between one or more of the fibres and the supporting surface. The problem is more acute in the case of so-called fibre ribbons in which a plurality, for example six or eight, plastic coated fibres are secured side by side, as it is necessary in most cases for all the fibres to be severed cleanly in the same transverse plane, and the failure of only one fibre to sever satisfactorily makes it necessary to carry out a further cleaving operation, with the resultant wastage of time and of fibres which this entails. The problem is aggravated by the fact that it is more difficult to remove the plastic coatings cleanly from the fibres of a fibre ribbon than it is from a single fibre.

If the fibres are nicked sequentially they will tend to cleave sequentially and the tension in the last fibre to cleave could rise to such an extent that hackle appears on the cleaved face. In addition, depending upon the mechanism for applying the cutter to the fibre, it is possible that the momentum of the cutter as it touches the last fibre would be different from that with which it touches the first.

According to the present invention a method of cleaving a plurality of optical fibres comprises tensioning the fibres over a surface in which there is formed a gap extending transverse to the fibre axes, applying a lightly loaded cutter moving radially with respect to the fibre axes under low momentum, to the surface of the fibres over said gap, and subsequently increasing the load on the cutter to apply a correspondingly increasing radial pressure on the
tensioned fibres to effect a cleavage of the fibres.

The presence of the gap results in a deflection
of the fibre or fibres initially contacted by the
cutter by a small amount, and compensates for
variations of the fibre diameters. It will be seen
that the maximum fibre deflection before each fibre
is contacted will only correspond to the tolerance on
the fibre outside diameter, over the width of the gap,
so that there will be very little change in the stress
distribution in the individual fibres. It has been
found that by this means it is possible to effect the
cleaving of a plurality of fibres before any significant
redistribution of tension between the fibres occurs,
the fibres being initially tensioned substantially
equally.

The variation in time taken for all the fibres
to cleave will depend, inter alia, on the maximum
difference in fibre diameter and the momentum of the
blade on impact, but in practice it has been found to
be sufficiently short for the above condition to be
met.

The axial tension in the fibres and the
momentum of the cutter as it contacts the initial
fibre will generally need to be increased slightly
compared with those needed for cleaving an individual
fibre as described in the aforesaid patent application,
and will depend upon the number of fibres to be
cleaved, but the most satisfactory values for the
tension and momentum for any particular application of
the invention may readily be found by trial.

The supporting surface is preferably convexly
curved about an axis parallel to the gap, the fibres
being arranged to be tensioned over the surface in
uniformly spaced radial planes. The surface is
preferably of part cylindrical shape and has radius
of curvature of the order of 50 to 75mm, with the edges which bound the gap preferably being polished to a smooth finish.

Preferably also, the gap has a width of between 0.75 and 2.5mm, the surface over which the fibres are tensioned preferably being formed by two separate spaced members, at least one of which is conveniently movable to enable the width of the gap to be adjusted.

The invention also includes within its scope apparatus for carrying out the cleaving of a plurality of parallel fibres by the method above described.

Thus according to another aspect of the invention such apparatus comprises a convex cylindrical supporting surface having a gap formed therein parallel to the axis of curvature of the surface, means for holding a plurality of optical fibres in tension over said surface so that they extend, parallel to each other across said gap and substantially at right angles thereto, a cutter located over said gap and mounted for travel approximately perpendicular to said axis so as to enable it to be brought into contact with the fibres so held, and damped loading means for applying a gradually increasing load to the cutter.

The loading means conveniently comprises a tiltable tube partially filled with liquid, the cutter being attached to the tube at a position offset from the tilt axis so that when the tube is tilted through the horizontal to bring the cutter close to the gap in the supporting surface the liquid travels along the tube, with the rate of flow limited by its viscosity, and increases the load on the cutter.

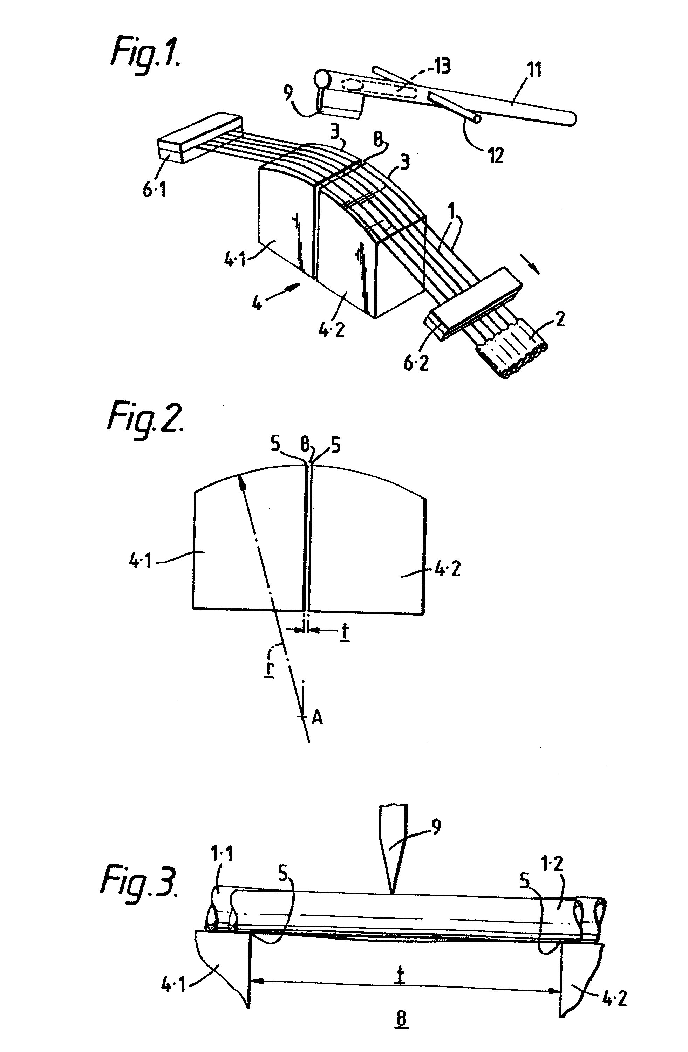

The cleaving of a plurality of fibres by the method of the invention will now be described by way of example with reference to Figures 1 to 3 of the accompanying schematic drawings, in which

Figure 1 illustrates diagrammatically, and not to scale, a perspective view of part of an apparatus for carrying out said method,

Figure 2 illustrates a front elevation of a fibre support employed in the apparatus, and

Figure 3 represents a much enlarged view of a section of the fibre support shown in Figure 2.

The fibres 1, for example six as shown, are incorporated into a fibre ribbon, each fibre being coated with a synthetic plastics material, the coatings 2, which may consist of U.V.-curable epoxy-urethane acrylate, being bonded to each other, for example by the method described in co-pending Patent Application No. 8506499.

After stripping the coatings 2 from a region of the fibres 1, the fibres are laid, parallel to each other, over the convex, part-cylindrical supporting surface 3 of an anvil 4 formed from two separate elements 4.1, 4.2, which are mirror images of each other and are spaced apart a distance $t$ of approximately 1mm, the width of the gap 8 between the elements conveniently being finely adjustable in any suitable manner. The convex surfaces of the anvil elements have a radius of curvature $r$ of about 60mm, and the edges 5 of those surfaces which bound the gap 8 between the elements are polished to a smooth finish.

On each side of the anvil 4 the fibres 1 are held in a clamp 6.1, 6.2 respectively, one of the clamps being fixed in position and the other being slidably movable towards and away from the anvil. The movable clamp 6.2 is coupled to means (not shown) for urging it away from the anvil under a controlled and adjustable force in order to tension the fibres 1, a gauge (also not shown) being provided for indicating the tension applied.

Guides may be provided between the clamps 6.1, 6.2 and the anvil 4 if needed to maintain the fibres 1 correctly aligned and spaced uniformly from each other, although they will not normally be necessary.

A cutter blade 9,which may be provided by a **0208415**
diamond or tungsten carbide is mounted at one end of a
pivoted arm 11, in the form of a liquid-filled tube,
constructed and mounted as described in U.K.Patent Publication No. 2134101-A, and is arranged to be lowered
gradually on to the fibres 1 over the centre of the gap 8,
by rotation about a longitudinally-extending supporting
spindle 12.

As the blade descends, it first contacts the
uppermost fibre, which may be the thickest fibre 1.1 as
shown in Figure 3, and will loose a small amount of
momentum. However, as the tubular arm 11 has been tilted
through the horizontal, the liquid 13 within the tube will
travel along it towards the blade and with the flow rate
limited by its viscosity, and then gradually increases
the load applied by the blade 9. The fibre 1.1 will bow
downwards under the blade 9, which will then contact
the second uppermost fibre 1.2. This fibre will also be
deflected slightly, the process continuing until all the
fibres have been contacted and nicked by the blade. As
the fibres are nicked the tension applied to them will
cause them to fracture, and as the maximum fibre
deflection is only the tolerance on the fibre outside
diameter over the width $t$ of the gap 8 it produces very
little change in the stress distribution of the fibres.
Moreover cleaving of all the fibres 1 occurs with sufficient rapidity to prevent any significant redistribution
of tension between the fibres, and by this means it is
possible to obtain uniformly clean cuts, with the cleaved
faces at angles of less than $2^{\circ}$ to radial planes. Thus
ribbons containing six fibres have been reproducibly
cleaved with length variations of less than 100 microns
between the shortest and longest fibres, and without the
formation of any appreciable hackle in the cleaved faces.

-7-

**0208415**

CLAIMS:

1.      A method of cleaving a plurality of optical fibres(1) comprising tensioning the fibres(1) over a supporting surface(3) in which there is formed a gap(8) extending transverse to the fibre axis, applying a lightly loaded cutter(9) moving radially with respect to the fibre axis under low momentum, to the surface of the fibres(1) over said gap(8), and subsequently increasing the load on the cutter(9) to apply a correspondingly increasing radial pressure on the tensioned fibres(1) to effect a cleavage of the fibres.

2.      A method of cleaving a plurality of optical fibres(1) according to Claim 1 characterised in that the supporting surface(3) is convexly curved about an axis parallel to the gap(8).

3.      A method of cleaving a plurality of optical fibres(1) according to Claim 2 characterised in that the supporting surface(3) is of part cylindrical shape and has radius of curvature of the order of 50 to 75mm.

4.      A method of cleaving a plurality of optical fibres(1) according to Claim 1, 2 or 3 characterised in that the edges which bound the gap(3) are polished to a smooth finish.

5.      A method of cleaving a plurality of optical fibres(1) according to Claim 4 characterised in that the gap(8) has a width of between 0.75 and 2.5mm.

6.      A method of cleaving a plurality of optical fibres(1) according to Claim 5 characterised in that the supporting surface(3) over which the fibres(1) are tensioned is formed by two separate spaced members (4.1, 4.2).

7.      A method of cleaving a plurality of optical fibres(1) according to Claim 6 characterised in that one or both the supporting members (4.1, 4.2) are movable so as to enable the width of the gap(8) to be adjusted.

8.       A method of cleaving a plurality of optical fibres(1) according to any preceding claim characterised in that the fibres(1) are tensioned over the supporting surface(3) in uniformly spaced radial planes.

9.       Apparatus for carrying out the method of cleaving a plurality of optical fibres as claimed in any preceding claim comprising a convex cylindrical supporting surface(3) having a gap(8) formed therein parallel to the axis of curvature of the surface(3), means for holding a plurality of optical fibres(1) in tension over said surface(3) so that they extend, parallel to each other across said gap(8) and substantially at right angles thereto, a cutter(9) located over said gap(8) and mounted for travel approximately perpendicular to said axis so as to enable it to be brought into contact with the fibres(1) so held, and damped loading means for applying a gradually increasing load to the cutter(9).

10.      Apparatus for carrying out the method of cleaving a plurality of optical fibres(1) according to Claim 9 characterised in that the loading means comprise a tiltable tube(11) partially filled with liquid, the cutter(9) being attached to the tube at a position offset from the tilt axis so that when the tube is tilted through the horizontal to bring the cutter(9) close to the gap(8) in the supporting surface(3) the liquid travels along the tube, with the rate of flow limited by its viscosity, and increases the load on the cutter(9).

## Fig.1.

## Fig.2.

## Fig.3.

**European Patent Office**

| | DOCUMENTS CONSIDERED TO BE RELEVANT | | EP 86304327.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | GB - A - 1 584 029 (STANDARD TELE-PHONES AND CABLES LIMITED)<br><br>* Page 1, lines 44-92; fig. 1,2 * | 1,2,6, 7,9 | C 03 B 37/16 |
| X | EP - A2,A3 - 0 129 135 (SIEMENS AKTIENGESELLSCHAFT)<br><br>* Claims 1,3,7,13,14; page 4, lines 13-21; page 5, line 29 - page 6, line 17; fig. 1 * | 1,2,9 | |
| D,Y | GB - A - 2 134 101 (THE GENERAL ELECTRIC COMPANY)<br><br>* Page 1, line 52 - page 2, line 78; fig. * | 1,2,9, 10 | |
| Y | EP - A1 - 0 096 331 (SIEMENS AKTIENGESELLSCHAFT)<br><br>* Claim 1; page 2, line 10 - page 3, line 32; fig. 1,2 * | 1,2,9, 10 | TECHNICAL FIELDS SEARCHED (Int. Cl.4)<br><br>C 03 B<br>D 01 G<br>B 26 D<br>G 02 B |

The present search report has been drawn up for all claims

| Place of search | Date of completion of the search | Examiner |
|---|---|---|
| VIENNA | 13-10-1986 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82